# EUROPÄISCHE PATENTSCHRIFT

(11) **EP 3 595 921 B1**
(45) Veröffentlichungstag und Bekanntmachung des Hinweises auf die Patenterteilung: **31.03.2021**
(21) Anmeldenummer: 18762035.6
(22) Anmeldetag: 17.08.2018
(51) Int. Cl.: B60K 15/03, B60K 15/073, B62D 21/16, B60K 15/067, F17C 1/00, B60K 15/07, B60K 15/063, F17C 11/00

(54) **BRENNSTOFFTANK UND FAHRZEUG**
FUEL TANK AND VEHICLE
RÉSERVOIR DE COMBUSTIBLE ET VÉHICULE

(30) Priorität: 22.08.2017 DE 102017214606
(43) Veröffentlichungstag der Anmeldung: 22.01.2020
(73) Patentinhaber: Audi AG, 85045 Ingolstadt (DE); VOLKSWAGEN AG, 38440 Wolfsburg (DE)
(72) Erfinder: BUCHHOLZ, Andre, 49124 Georgsmarienhütte (DE); SCHÖNWALD, Christian, 38448 Wolfsburg (DE); SARIOGLU, Ismail Levent, Cambridge, MA 02141 (US); KRAUS, Maik, 39104 Magdeburg (DE)
(86) Internationale Anmeldenummer: PCT/EP2018/072324
(87) Internationale Veröffentlichungsnummer: WO 2019/038198

(56) Entgegenhaltungen:
- EP-A1- 3 346 179
- EP-A2- 1 431 096
- EP-A2- 2 508 381
- WO-A2-03/085314
- WO-A2-2005/079540
- DE-U1-202006 004 434
- FR-A1- 2 857 630
- JP-A- 2004 017 669
- US-A1- 2013 224 410

## Beschreibung

Die Erfindung betrifft einen Brennstofftank und ein Fahrzeug, welches den Brennstofftank aufweist.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für membrane electrode assembly), die ein Gefüge aus einer ionenleitenden (meist protonenleitenden) Membran und jeweils einer beidseitig an der Membran angeordneten katalytischen Elektrode (Anode und Kathode) ist. Letztere umfassen zumeist geträgerte Edelmetalle, insbesondere Platin. Zudem können Gasdiffusionslagen (GDL) beidseitig der Membran-Elektroden-Anordnung an den der Membran abgewandten Seiten der Elektroden angeordnet sein. In der Regel wird die Brennstoffzelle durch eine Vielzahl im Stapel (Brennstoffzellenstapel) angeordneter MEAs gebildet, deren elektrische Leistungen sich addieren. Zwischen den einzelnen Membran-Elektroden-Anordnungen sind in der Regel Bipolarplatten (auch Flussfeld- oder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den MembranElektroden-Anordnungen.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu Protonen H⁺ unter Abgabe von Elektronen stattfindet (H₂ → 2 H⁺ + 2 e⁻). Über den Elektrolyten oder die Membran, welche die Reaktionsräume gasdicht voneinander trennt und elektrisch isoliert, erfolgt ein (wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (½ O₂ + 2 e⁻ → O²⁻). Gleichzeitig reagieren im Kathodenraum die Sauerstoffanionen mit den über die Membran transportierten Protonen unter Bildung von Wasser (O²⁻ + 2 H⁺ → H₂O).

Als Speicher für den Brennstoff wurden bisher CFK Druckspeicher mit einem Maximaldruck von 700 bar im Heck des Fahrzeugs und im Getriebetunnel ohne strukturelle Einbindung verwendet. CFK steht für carbonfaserverstärkter Kunststoff oder kohlenstofffaserverstärkter Kunststoff. Ebenso ist eine nichtstrukturelle Einbindung von Metallhydridspreichern bekannt. Auch ist eine strukturelle Einbindung am Verbauort bekannt, die nicht wesentlich zur Gesamtsteifigkeit beiträgt. Daraus ergeben sich Nachteile bezüglich eines geringeren Innenraumvolumens und zudem Bauraumeinschränkungen. Ferner werden potentielle Struktureinsparungen nicht genutzt.

Um dies zu kompensieren wurden bisher mehrere kleinere Tanks anstelle eines einzelnen Tanks zur Darstellung der gewünschten Kapazität und Reichweite verwendet, was für sich betrachtet zu einer deutlichen Kostensteigerung führt. Ferner wurden Kohlefasertanks eingesetzt, um den Gewichtsnachteil kleinerer Tanks mit geringerem Nutzvolumenverhältnis zum benötigten Bauraum auszugleichen.

DE 10 2005 003 669 A1 offenbart ein Kraftfahrzeug mit einem Rahmenzusammenbau, wobei ein Fluidspeichervolumen für Brennstoff in einem länglichen Schienenabschnitt des Rahmenzusammenbaus definiert ist.

DE 10 2011 051 436 A1 offenbart einen Wasserstoffspeicher (ein Druckspeicher) für ein Fahrzeug, welcher als eine Verstärkung eines Rahmens einer tragenden Struktur dient. Im Falle eines Aufpralls des Fahrzeugs auf ein Hindernis versagen Verbindungselemente, bevor eine zu hohe Kraft in den Druckspeicher eingeleitet wird, welche zu einer Beschädigung des Druckspeichers führen könnte.

In den Dokumenten US 2013/224410 A1, EP 2 508 381 A2, DE 20 2006 004434 U1, WO 2005/079540 A2, WO 03/085314 A2, FR 2 857 630 A1, EP 1 431 096 A2 und JP 2004 017669 A werden verschiedene konventionelle Brennstofftanks offenbart, die wenigstens zwei aufeinandergestapelte Lagen aus mehreren aneinandergereihten Einzeltanks aufweisen.

Auch in EP 3 346 179 A1 wird ein derartiger Brennstofftank mit aufeinandergestapelten Lagen von Einzeltanks beschrieben, wobei die Orientierungen der Lagen einen Winkel von 90° zueinander aufweisen.

Der Erfindung liegt nun die Aufgabe zugrunde, einen Brennstofftank vorzuschlagen, welcher eine erhöhte Steifigkeit gegenüber bekannten Brennstofftanks aufweist.

Diese Aufgabe wird durch einen Brennstofftank mit den Merkmalen des unabhängigen Anspruchs gelöst.

Erfindungsgemäß wird ein Brennstofftank mit wenigstens zwei aufeinandergestapelten Lagen zur Verfügung gestellt, wobei die Lagen jeweils mehrere aneinandergereihte Einzeltanks aufweisen. Die Einzeltanks sind länglich ausgebildet und eine Längserstreckung der länglichen Einzeltanks definiert eine Orientierung der jeweiligen Lage, wobei die wenigstens zwei Lagen eine unterschiedliche Orientierung aufweisen und die Orientierungen der Lagen einen Winkel von 90° zueinander aufweisen. Mehrere Einzeltanks einer Lage weisen einen stirnseitig angeordneten Anschluss auf, welcher innerhalb einer Struktur des Brennstofftanks angeordnet ist. Die Struktur ist eine von den Einzeltanks separate Hilfsstruktur, die als Schiene ausgebildet ist und innerhalb welcher mehrere Anschlüsse der Einzeltanks einer Lage angeordnet sind.

Dadurch, dass der Brennstofftank zwei aufeinandergestapelte Lagen, also zwei Lagen deren Hauptflächen (die größten Flächen) sich gegenüberstehen, aufweist, wird eine Steifigkeit, insbesondere eine Biegesteifigkeit des Tanks stark erhöht. Die Lagen sind insbesondere planparallel zueinander angeordnet. Es besteht die Möglichkeit einer Strukturintegration in eine Fahrgastzelle eines Fahrzeugs, also einer Aussteifung der Fahrgastzelle. Dass die Lagen aufeinandergestapelt sind, bedeutet nicht zwangsläufig, dass die Lagen räumlich übereinandergestapelt sind, wobei dies aber dennoch der Fall sein kann. Vielmehr kann dies bedeuten, dass Hauptflächen der wenigstens zwei Lagen flächig aneinandergereiht sind. Die Einzeltanks sind insbesondere parallel aneinandergereiht, wodurch die Lage optimal mit Einzeltanks gefüllt ist. Die Lagen erstrecken sich insbesondere innerhalb einer Ebene, weisen also eine ebene Erstreckung auf.

Die Einzeltanks sind länglich (ausgebildet). Dass die Einzeltanks länglich sind, bedeutet, dass deren Länge größer ist als ihre Breite, Dicke oder ihr Durchmesser. Vorzugsweise ist die Länge der Einzeltanks wenigstens fünfmal, insbesondere wenigstens zehnmal, besonders bevorzugt wenigstens zwanzigmal so groß wie ihre Breite, Dicke oder ihr Durchmesser. Die Einzeltanks können dabei einen rechteckigen, insbesondere quadratischen, oder runden Querschnitt aufweisen. Die Einzeltanks können auch als einzelne Tanks bezeichnet werden, stellen also insbesondere voneinander getrennte Volumen dar. Die länglichen Einzeltanks sind vorzugsweise so aneinandergereiht, dass Längsseiten der Einzeltanks aneinandergereiht sind, wodurch ein kompakter Brennstofftank geschaffen wird.

Die Einzeltanks sind insbesondere Metall-Hydrid-Energiespeicher. Derartige Einzeltanks eignen sich besonders zum Speichern von Wasserstoff.

Bevorzugt sind die einzelnen Lagen und/oder die Einzeltanks kräfteleitend miteinander verbunden, insbesondere verklebt oder verschraubt, um die Steifigkeit des Brennstofftanks als Gesamtes weiter zu erhöhen.

Es ist vorgesehen, dass eine Längserstreckung der länglichen Einzeltanks eine Orientierung der jeweiligen Lage definiert und die wenigstens zwei Lagen eine unterschiedliche Orientierung aufweisen. Die Einzeltanks einer der Lagen sind also zu den Einzeltanks der wenigstens einen anderen Lage quer (verdreht) angeordnet. Dadurch wird der Brennstofftank noch steifer, insbesondere in einer zweiten Richtung biegesteifer, wodurch die Aussteifung (Versteifung) der Fahrgastzelle weiter erhöht werden kann.

Dabei ist vorgesehen, dass die Orientierungen der Lagen einen Winkel von 90° zueinander aufweisen. Die Einzeltanks sind also in mehreren zueinander um 90° gedrehten Lagen angeordnet. Damit wird eine optimale Steifigkeit des Brennstofftanks erreicht, da der Brennstofftank in zwei rechtwinkelig zueinander angeordneten Richtungen ausgesteift ist. Dadurch kann eine besonders gute Strukturintegration, also Aussteifung, einer Fahrgastzelle eines Fahrzeugs erreicht werden.

Es ist vorgesehen, dass wenigstens mehrere der Einzeltanks einen stirnseitig angeordneten Anschluss aufweisen, welcher innerhalb der Struktur des Brennstofftanks angeordnet ist. Die Struktur ist insbesondere dazu ausgebildet, von außerhalb des Brennstofftanks auf diesen einwirkende Kräfte an die Einzeltanks weiterzuleiten. Dabei ist die Struktur insbesondere so (steif) ausgeführt, dass der Anschluss vor den Kräften geschützt ist. Der Anschluss dient insbesondere zum Befüllen und/oder Entleeren des Einzeltanks.

Vorzugsweise ist der Anschluss als eine Verschraubung ausgebildet, welche eine besonders einfache Variante des Anschlusses darstellt. Insbesondere umfasst der Anschluss ein Ventil oder ist als ein Ventil ausgebildet. Dies ist besonders vorteilhaft, da verglichen mit einem Betrieb der Brennstoffzelle, Betriebsdrücke bei einem Betanken des Brennstofftanks relativ hoch sind.

Es ist vorgesehen, dass die Struktur des Brennstofftanks eine von den Einzeltanks separate Hilfsstruktur ist. Somit stellt der Anschluss einen außenliegenden Anschluss (außerhalb des Einzeltanks) dar, welches durch zusätzliche strukturelle Maßnahmen, also die Hilfsstruktur, insbesondere durch einen Hilfsrahmen, geschützt wird. Dadurch werden der Konstruktionsaufwand und somit die Kosten des Einzeltanks reduziert. Die Hilfsstruktur ist als eine Schiene ausgebildet, innerhalb welcher mehrere, insbesondere alle Anschlüsse der Einzeltanks (einer Lage) angeordnet sind.

Es ist vorgesehen, dass der der wenigstens eine Einzeltank wenigstens eine Versorgungsleitung aufweist, welche quer zu einer Längserstreckung der Einzeltanks durch die Struktur geführt wird. Die wenigstens eine Versorgungsleitung umfasst insbesondere zwei Versorgungsleitungen (insbesondere eine Zu- und eine Ableitung), welche die Anschlüsse (insbesondere Ventile) der Einzeltanks (einer Lage) miteinander verbinden können. Die Versorgungsleitungen (für den Brennstoff) werden bei einer als Tankkappe ausgebildeten Struktur (also bei einer integralen Struktur des Einzeltanks) durch seitliche Öffnungen der Tankkappe und insbesondere von einer Tankkappe zur nächsten Tankkappe geführt. Diese Struktur ist als Schiene ausgebildet, so können die Versorgungsleitungen innerhalb der Schiene und von dieser geschützt geführt werden.

Alle Einzeltanks weisen den genannten stirnseitig angeordneten Anschluss auf, wobei die Anschlüsse, insbesondere alle, innerhalb einer oder mehrerer der genannten Strukturen angeordnet und von dieser oder diesen geschützt werden.

Ferner wird ein Fahrzeug umfassend einen erfindungsgemäßen Brennstofftank zur Verfügung gestellt. Vorzugsweise ist das Fahrzeug ein Brennstoffzellenfahrzeug. Dieses weist typischerweise eine Brennstoffzelle zur Bereitstellung von elektrischer Energie für einen (elektrischen) Antriebsmotor des Fahrzeugs auf. Der Brennstofftank ist somit zur Speicherung eines Brennstoffs, insbesondere von Wasserstoff, für die Brennstoffzelle eingerichtet. Der Wasserstoff dient also als Treibstoff für das Brennstoffzellenfahrzeug. Durch die Erfindung wird somit ein besonders steifes Brennstoffzellenfahrzeug geschaffen, welches sich durch seine verringerte Masse bei gleichzeitig erhöhter Verformungsresistenz, insbesondere bei einem Unfall, auszeichnet.

Der Brennstofftank ist vorzugsweise in eine tragende Struktur des Fahrzeugs, also beispielsweise sein Chassis, seine Fahrgastzelle oder seinen Rahmen strukturell integriert. Dadurch wird die tragende Struktur des Fahrzeugs versteift. Mit anderen Worten bildet der Brennstofftank einen Teil der tragenden Struktur des Fahrzeugs.

Vorzugsweise dient der Brennstofftank als Lastpfad bei einem Anprall (Crash), sowohl bei einem Seiten- als auch Frontalanprall.

Bevorzugt ist der Brennstofftank derart im Fahrzeug angeordnet, dass die aufeinandergestapelten Lagen übereinander angeordnet sind, wodurch eine kompakte Einbaulage des Brennstofftanks gewährleistet ist.

Vorzugsweise ist vorgesehen, dass das Fahrzeug eine Fahrgastzelle umfasst, unterhalb welcher der Brennstofftank angeordnet ist. Somit ist der Brennstofftank insbesondere in die tragende Struktur eines Unterbodens des Fahrzeugs integriert. Dadurch werden eine Gewichtseinsparung im Bereich des Mittelwagens (also im Bereich der Fahrgastzelle) und zudem ein größerer nutzbarer Fahrzeuginnenraum erreicht.

Bevorzugt ist vorgesehen, dass die Orientierung einer der Lagen der Fahrzeuglängsrichtung und die Orientierung einer anderen Lage des Brennstofftanks der Fahrzeugquerrichtung entspricht. Somit wird das Fahrzeug sowohl in Fahrzeuglängsrichtung als auch in Fahrzeugquerrichtung versteift. Zudem wird die Fahrgastzelle sowohl bei einem Seiten- als auch Frontalanprall besser vor Verformungen geschützt.

Vorzugsweise ist dabei vorgesehen, dass sich die Einzeltanks jener Lage mit der Orientierung in Fahrzeuglängsrichtung über die gesamte Länge der Fahrgastzelle erstrecken. Ferner bevorzugt ist vorgesehen, dass sich die Einzeltanks jener Lage mit der Orientierung in Fahrzeugquerrichtung über die gesamte Breite (insbesondere zwischen Seitenschwellern des Fahrzeugs) der Fahrgastzelle erstrecken. Somit wird die Fahrgastzelle optimal ausgesteift (versteift) und bei einem Anprall geschützt.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Brennstofftank gemäß einer nicht zur Erfindung gehörenden Ausgestaltung;
- Figur 2: eine Detailansicht des Brennstofftanks nach Figur 1;
- Figur 3: einen Brennstofftank gemäß einer erfindungsgemäßen Ausgestaltung; und
- Figur 4: eine schematische Darstellung eines Fahrzeugs gemäß einer bevorzugten Ausgestaltung.

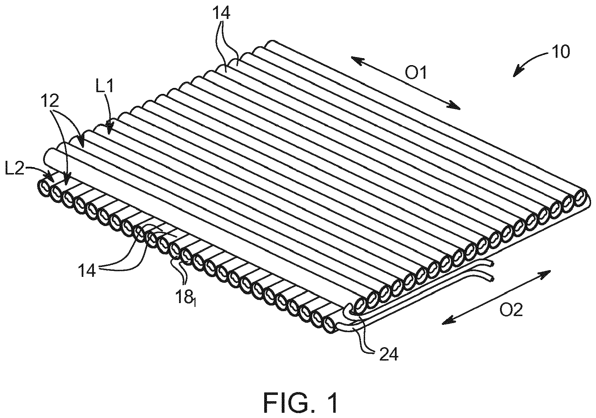

Figur 1 zeigt einen Brennstofftank 10 gemäß einer nicht zur vorliegenden Erfindung gehörenden Ausgestaltung. Der Brennstofftank 10 weist wenigstens zwei aufeinandergestapelte Lagen 12 auf, wobei jede der Lagen 12 jeweils mehrere parallel aneinandergereihte Einzeltanks 14 aufweist. Die Einzeltanks 14 sind länglich ausgebildet und so aneinandergereiht, dass Längsseiten der Einzeltanks 14 aneinandergereiht sind. Die Einzeltanks 14 können als Metall-Hydrid-Speicher, beispielsweise zum Speichern von Wasserstoff ausgebildet sein. Das Metall-Hydrid ist dabei in den als hohle Stangen ausgebildeten Einzeltanks 14 angeordnet.

Eine Längserstreckung der länglichen Einzeltanks 14 definiert eine Orientierung O1 oder 02 der jeweiligen Lage L1 oder L2. Die beiden Lagen L1 und L2 weisen dabei eine unterschiedliche Orientierung auf. Die Orientierungen O1 und O2 schließen also einen Winkel ein, welcher im dargestellten Fall 90° (Grad) beträgt. Es ist leicht ersichtlich, dass die einzelnen Lagen je nach Belastungsrichtung eine unterschiedliche Steifigkeit aufweisen. Dadurch, dass die beiden Lagen 12 um 90° zueinander verdreht angeordnet sind, weist der Brennstofftank 10 in zwei orthogonalen Richtung in etwa dieselbe Steifigkeit auf.

Die Einzeltanks 14 weisen stirnseitig angeordnete Anschlüsse 16 auf, welche folgend als Ventile 16 ausgebildet sein können, welche innerhalb von Strukturen 18 des Brennstofftanks 10 angeordnet sind. Die Strukturen 18 schützt die Ventile 16 im Falle einer gesteigerten Krafteinwirkung auf den Brennstofftank 10, z. B. bei einem Anprall. Ferner ermöglichen die Strukturen 18 eine Anbindung des Brennstofftanks 10 an eine angrenzende (Fahrzeug-) Struktur und dienen so zur Kraftweiterleitung zwischen der (Fahrzeug-) Struktur und den Einzeltanks 14.

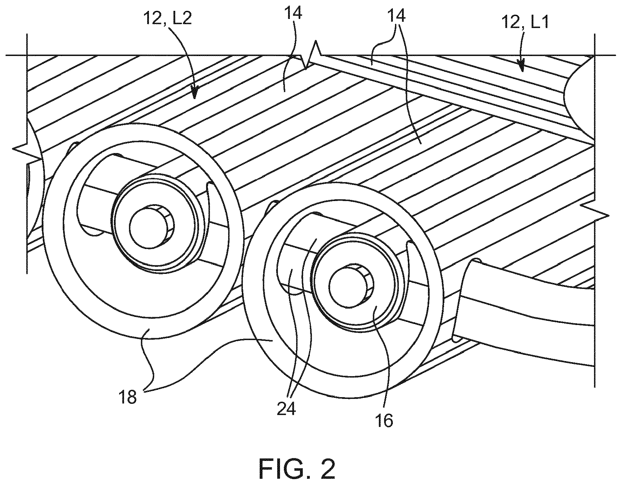

Wie in Figur 1 und insbesondere in Figur 2 ersichtlich ist, sind die Strukturen 18 Strukturen 20 der Einzeltanks 14. Die Strukturen 20 sind dazu als stirnseitig angeordnete Fortsätze der Einzeltanks 14 ausgebildet und mit diesen integral verbunden. Sie können somit auch als Tankkappe 20, Anschlusskappe 20 oder Ventilkappe 20 bezeichnet werden. Die Strukturen 20 können stirnseitig offen ausgebildet sein, um einen Zugang zu den Ventilen 16 zu ermöglichen.

Ferner weisen die Strukturen 20 seitliche Öffnungen 22 auf, welche Durchlässe für Versorgungsleitungen 24 des Brennstofftanks 10 darstellen. Die Versorgungsleitungen 24 können dadurch durch die Strukturen 20 geführt werden und alle Ventile 16 der Einzeltanks 14 der jeweiligen Lage 12 (L1 oder L2) miteinander verbinden. Pro Lage 12 können dabei zwei Versorgungsleitungen 24 vorgesehen sein, eine als Zufluss- und eine als Abflussleitung.

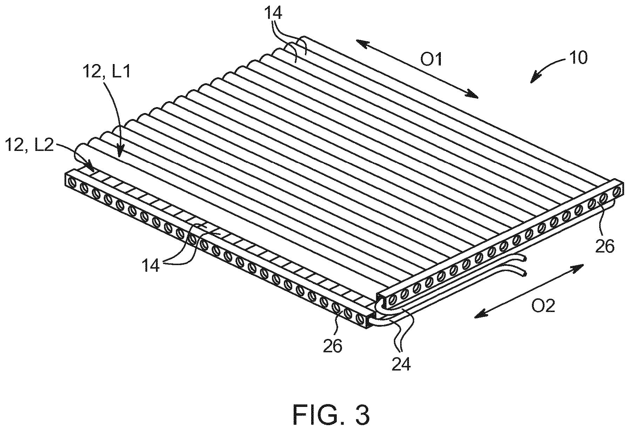

Die Strukturen 18 sind erfindungsgemäß nicht Bestandteil der Einzeltanks 14. Die Strukturen 18 des Brennstofftanks 10 sind als von den Einzeltanks 14 separate Hilfsstrukturen 26 ausgebildet (Figur 3). Dass die Hilfsstrukturen 26 von den Einzeltanks 14 separat sind, schließt natürlich nicht aus, dass diese mit den Einzeltanks 14 kräfteleitend verbunden sind. Vielmehr bedeutet dies, dass als Hilfsstrukturen 26 Bauteile vorgesehen sind, welche von den Einzeltanks 14 unabhängig ausgeformt sind.

Die einzelnen Lagen 12 (L1 und L2) können kräfteleitend miteinander verbunden, beispielsweise verklebt oder verschraubt sein, um die Steifigkeit des Brennstofftanks 10 weiter zu erhöhen.

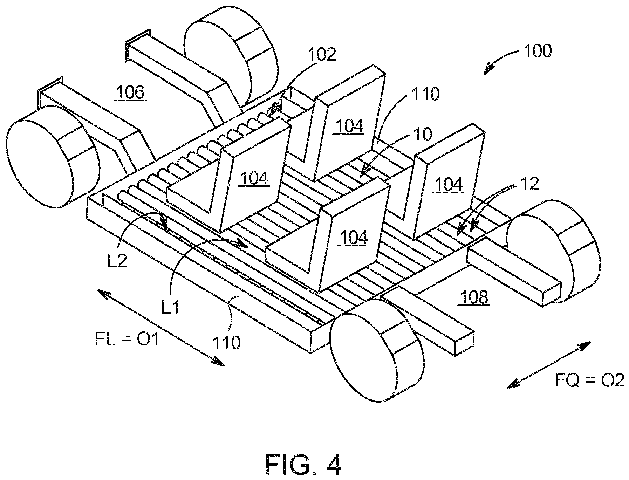

In Figur 4 ist ein Fahrzeug 100 ersichtlich, welches als ein Brennstoffzellenfahrzeug ausgebildet sein kann. Das Fahrzeug 100 umfasst in diesem Fall eine Brennstoffzelle (nicht dargestellt) zur Bereitstellung von elektrischer Energie für einen Antriebsmotor (ein nicht dargestellter Traktionsmotor) des Fahrzeugs 100. Der Brennstofftank 10 dient zur Speicherung von Wasserstoff welcher von der Brennstoffzelle bei deren Betrieb zu elektrischer Energie umgesetzt wird.

Das Fahrzeug 100 weist eine Fahrgastzelle 102 auf, welche die Sitze 104 des Fahrzeugs 100 umschließt und so in bekannter Weise einen geschützten Raum für Fahrzeuginsassen bildet. Unterhalb der Sitze 104 und der Fahrgastzelle 102 ist der Brennstofftank 10 angeordnet. Der Brennstofftank 10 kann dabei im Wesentlichen die gesamte Fläche unterhalb der Fahrgastzelle 102 einnehmen. Die länglichen Einzeltanks 14 der ersten Lage L1 erstrecken sich somit im Wesentlichen über die gesamte Länge der Fahrgastzelle 102, währen sich die Einzeltanks 14 der zweiten Lage L2 im Wesentlichen über die gesamte Breite der Fahrgastzelle 102 erstrecken. Somit ist mittels des Brennstofftanks 10 eine Kraftleitung zwischen einem Vorderwagen 106 und einem Hinterwagen 108 des Fahrzeugs 100 gegeben. Dies erfolgt hauptsächlich mittels der ersten Lage L1. Ferner sind auch die beiden Seitenschweller 110 kräfteleitend mittels des Brennstofftanks 10 verbunden, wobei dies hauptsächlich durch die zweite Lage L2 gewährleistet wird.

Dazu entspricht die Orientierung O1 der ersten Lage L1 der Fahrzeuglängsrichtung FL und die Orientierung 02 einer zweiten Lage L2 des Brennstofftanks 100 der Fahrzeugquerrichtung FQ. Natürlich könnten die Lagen L1 und L2 in ihrer Anordnung vertauscht werden, sodass die zweite Lage L2 oberhalb der ersten Lage L1 vorgesehen ist.

Ferner könnte in den Ausgestaltungen gemäß den Figuren 1 bis 4 noch wenigstens eine weitere Lage 12 vorgesehen sein. Die Orientierung der wenigstens einen weiteren Lage könnte dabei der Orientierung O1 oder 02 entsprechen oder von diesen verschieden sein.

Insgesamt wird durch den erfindungsgemäßen Brennstofftank 10 eine erhöhte Steifigkeit des Brennstofftanks 10 erreicht. Diese erhöhte Steifigkeit kann dazu genutzt werden, um das erfindungsgemäße Fahrzeug 100 zu versteifen und/oder leichter zu gestalten. Dies erfolgt bei gleichzeitig erhöhter Sicherheit für Passagiere des Fahrzeugs 100 im Falle eines Unfalls.

### Bezugszeichenliste

- 10: Brennstofftank
- 12: Lage
- 14: Einzeltank
- 16: Anschluss / Ventil
- 18: Struktur des Brennstofftanks
- 20: Struktur des Einzeltanks / Tankkappe / Anschlusskappe / Ventilkappe
- 22: Öffnungen
- 24: Versorgungsleitungen
- 26: Hilfsstruktur

- L1: erste Lage
- L2: zweite Lage
- O1: erste Orientierung / Orientierung der ersten Lage
- O2: zweite Orientierung / Orientierung der zweiten Lage

- 100: Fahrzeug
- 102: Fahrgastzelle
- 104: Sitze
- 106: Vorderwagen
- 108: Hinterwagen
- 110: Seitenschweller

## Patentansprüche

1. Brennstofftank (10) mit wenigstens zwei aufeinandergestapelten Lagen (12), wobei die Lagen (12) jeweils mehrere aneinandergereihte Einzeltanks (14) aufweisen, wobei die Einzeltanks (14) länglich ausgebildet sind und eine Längserstreckung der länglichen Einzeltanks (14) eine Orientierung (O1 oder 02) der jeweiligen Lage (L1 oder L2) definiert, wobei die wenigstens zwei Lagen (12) eine unterschiedliche Orientierung (O1, 02) aufweisen und wobei die Orientierungen (O1, 02) der Lagen (12) einen Winkel von 90° zueinander aufweisen, **dadurch gekennzeichnet, dass** mehrere Einzeltanks (14) einer Lage (12) einen stirnseitig angeordneten Anschluss (16) aufweisen, welcher innerhalb einer Struktur (18) des Brennstofftanks (10) angeordnet ist, wobei die Struktur (18) des Brennstofftanks (10) eine von den Einzeltanks (14) separate Hilfsstruktur (26) ist, die als Schiene ausgebildet ist und innerhalb welcher mehrere Anschlüsse (16) der Einzeltanks (14) einer Lage (12) angeordnet sind.

2. Brennstofftank (10) nach Anspruch 1, **dadurch gekennzeichnet, dass** der wenigstens eine Einzeltank (14) wenigstens eine Versorgungsleitung (24) aufweist, welche quer zu einer Längserstreckung der Einzeltanks (14) durch die Struktur (18) geführt wird.

3. Fahrzeug (100), insbesondere Brennstoffzellenfahrzeug, umfassend einen Brennstofftank (10) nach einem der vorhergehenden Ansprüche.

4. Fahrzeug (100) nach Anspruch 3, **dadurch gekennzeichnet, dass** das Fahrzeug (100) eine Fahrgastzelle (102) umfasst, unterhalb welcher der Brennstofftank (10) angeordnet ist.

5. Fahrzeug (100) nach einem der Ansprüche 3 oder 4, **dadurch gekennzeichnet, dass** die Orientierung (O1) einer der Lagen (L1) der Fahrzeuglängsrichtung (FL) und die Orientierung (02) einer anderen Lage (L2) der Fahrzeugquerrichtung (FQ) entspricht.

## Claims

1. Fuel tank (10) comprising at least two layers (12) stacked one on top of the other, wherein the layers (12) each have a plurality of individual tanks (14) arranged in series, wherein the individual tanks (14) are elongate and a longitudinal extension of the elongate individual tanks (14) defines an orientation (O1 or 02) of the respective layer (L1 or L2), wherein the at least two layers (12) have a different orientation (O1, 02), and wherein the orientations (O1, 02) of the layers (12) form an angle of 90° to one another, **characterised in that** a plurality of individual tanks (14) of a layer (12) have a connector (16) arranged on a front face, which is arranged inside a structure (18) of the fuel tank (10), wherein the structure (18) of the fuel tank (10) is an auxiliary structure (26) separate from the individual tanks (14) which is formed as a rail inside which a plurality of connectors (16) of the individual tanks (14) of a layer (12) are arranged.

2. Fuel tank (10) according to claim 1, **characterised in that** the at least one individual tank (14) has at least one supply line (24) which runs through the structure (18) perpendicular to a longitudinal extension of the individual tanks (14).

3. Vehicle (100), in particular a fuel cell vehicle, comprising a fuel tank (10) according to any of the preceding claims.

4. Vehicle (100) according to claim 3, **characterised in that** the vehicle (100) comprises a passenger compartment (102), underneath which the fuel tank (10) is arranged.

5. Vehicle (100) according to one of claims 3 or 4, **characterised in that** the orientation (O1) of one of the layers (L1) corresponds to the vehicle longitudinal direction (FL) and the orientation (02) of one of the other layers (L2) corresponds to the vehicle transverse direction (FQ).

## Revendications

1. Réservoir de carburant (10) avec au moins deux couches (12) empilées l'une sur l'autre, dans lequel les couches (12) présentent respectivement plusieurs réservoirs individuels (14) alignés les uns aux autres, dans lequel les réservoirs individuels (14) sont réalisés de manière allongée et une extension longitudinale des réservoirs individuels (14) allongés définit une orientation (O1 et 02) de la couche (L1 ou L2) respective, dans lequel les au moins deux couches (12) présentent une orientation (O1, 02) différente et dans lequel les orientations (O1, 02) des couches (12) présentent les unes par rapport aux autres un angle de 90°, **caractérisé en ce que** plusieurs réservoirs individuels (14) d'une couche (12) présentent une borne (16) disposée côté frontal, laquelle est disposée à l'intérieur d'une structure (18) du réservoir de carburant (10), dans lequel la structure (18) du réservoir de carburant (10) est une structure auxiliaire (26) séparée des réservoirs individuels (14), qui est réalisée en tant que rail et à l'intérieur de laquelle plusieurs bornes (16) des réservoirs individuels (14) d'une couche (12) sont disposées.

2. Réservoir de carburant (10) selon la revendication 1, **caractérisé en ce que** l'au moins un réservoir individuel (14) présente au moins une conduite d'alimentation (24), laquelle est guidée à travers la structure (18) de manière transversale par rapport à une extension longitudinale des réservoirs individuels (14).

3. Véhicule (100), en particulier véhicule à piles à combustible, comprenant un réservoir de carburant (10) selon l'une quelconque des revendications précédentes.

4. Véhicule (100) selon la revendication 3, **caractérisé en ce que** le véhicule (100) comprend un habitacle (102), sous lequel est disposé le réservoir de carburant (10).

5. Véhicule (100) selon l'une quelconque des revendications 3 ou 4, **caractérisé en ce que** l'orientation (O1) d'une des couches (Ll) correspond au sens longitudinal de véhicule (FL) et l'orientation (02) d'une autre couche (L2) correspond au sens transversal de véhicule (FQ).
